# EUROPÄISCHE PATENTSCHRIFT

(11) **EP 2 442 078 B1**
(45) Veröffentlichungstag und Bekanntmachung des Hinweises auf die Patenterteilung: **23.07.2014**
(21) Anmeldenummer: 12150897.2
(22) Anmeldetag: 01.02.2008
(51) Int. Cl.: G01F 11/40

(54) **Verschlusseinrichtung und Verfahren zum Betrieb der Verschlusseinrichtung**
CLOSURE DEVICE AND METHOD FOR OPERATING THE CLOSURE DEVICE
DISPOSITIF DE FERMETURE ET PROCÉDÉ POUR FAIRE FONCTIONNER UN DISPOSITIF DE FERMETURE

(30) Priorität: 06.02.2007 DE 102007005820
(43) Veröffentlichungstag der Anmeldung: 18.04.2012
(62) Teilanmeldung aus: 08708562.7
(73) Patentinhaber: FLSmidth A/S, 2500 Valby (DK)
(72) Erfinder: Pottmann, Manfred, 42855 Remscheid (DE)
(74) Vertreter: Brötz, Helmut

(56) Entgegenhaltungen:
- EP-A- 1 050 496
- DE-A1- 10 121 645
- DE-U1- 29 521 773
- DE-U1- 29 700 303
- US-A- 2 805 836
- US-A- 3 047 006
- US-A- 4 060 183

## Beschreibung

Die vorliegende Erfindung betrifft eine Verschlusseinrichtung, insbesondere für eine Probendosiervorrichtung zur Dosierung von Probenmaterial aus rieselfähigem Schüttgut, umfassend ein Füllkammergehäuse oder zumindest ein Gehäuseteil, das einen Hohlquerschnitt einer Füllkammer berandet, und umfassend zumindest einen eine Durchgangsöffnung aufweisenden Trennschieber, der in einem Führungsspalt quer zu einer Füllkammerlängsrichtung zwischen einer Offenstellung und einer Geschlossenstellung verschieblich ist, wobei der Trennschieber in der Offenstellung mit seiner Durchgangsöffnung einen Durchlass eines Füllkammerquerschnitts bildet und der Trennschieber in der Geschlossenstellung den Füllkammerquerschnitt verschließt.

Derartige Verschlusseinrichtungen dienen z.B. zur volumetrischen Dosierung von rieselfähigem Probenmaterial, um anschließend an einer genau definierten Menge des Probenmaterials Untersuchungen bspw. zur Zusammensetzung und zu Eigenschaften des Materials durchzuführen. Derartige Proben können aus den unterschiedlichsten Materialien bestehen, wobei lediglich beispielhaft Zement, Klinker oder bspw. gebrochene Schlacke zu nennen sind. Zur Dosierung wird im Regelfall so vorgegangen, dass das rieselfähige Probenmaterial zunächst von oben im Überschuss in die dafür zunächst unterseitig geschlossene Füllkammer eingefüllt wird und dann ein auf einer bestimmten Füllkammerhöhe angeordneter Trennschieber durch das eingefüllte Schüttgut hindurchgeschoben wird, so dass in der Füllkammer eine auch nach oben hin abgeschlossene Dosierkammer entsteht und dadurch die dosierte Probe von dem überschüssigen Schüttgut abgetrennt ist. Dabei resultiert das Dosiervolumen aus der Gestalt bzw. dem Hohlquerschnitt der Füllkammer und dem Abstand des (oberen) Trennschiebers von dem Füllkammerboden. Auch bei letzterem kann es sich um einen solchen Trennschieber handeln, der zur Entnahme der dosierten Probe aus der Geschlossen- in die Offenstellung verfahren werden kann. Um eine möglichst genaue Dosierung zu erreichen und den Trennschieber mit nur geringem Widerstand durch das eingefüllte Schüttgut verfahren zu können, haben sich Trennschieber aus möglichst dünnem Material, bspw. aus Edelstahlblech mit einer Dicke von etwa 1 bis 2 mm, bewährt. Andererseits benötigen insbesondere dünnwandige Trennschieber quer zur Verschieberichtung eine Führung. Um eine genaue Dosierung zu ermöglichen, wird der Trennschieber im Randbereich des Füllkammer-Hohlquerschnitts, insbesondere davor und dahinter, in einem Führungsspalt längsverschieblich aufgenommen, dessen Spalthöhe so bemessen ist, dass Abweichungen des Trennschiebers aus der gewünschten Verschiebungsebene möglichst vermieden werden. Befindet sich der Trennschieber in der Offenstellung, wird der an den Bereich mit der Durchgangsöffnung anschließende, über den Hohlquerschnitt überstehende Längenabschnitt des Trennschiebers in einem Gehäusespalt aufgenommen. Um zu vermeiden, dass an dem Trennschieber anhaftende Probenpartikel (insbesondere Probenstaub) mit in den Spalt gelangen, wurde versucht, den Trennschieber durch an ihm anliegende, den Hohlquerschnitt umrandende Dichtelemente zu führen. Es besteht jedoch dabei die Schwierigkeit, dass bestimmte Probenmaterialien abrasive Wirkung haben und die Dichtungen und den Trennschieber im Laufe der Zeit beschädigen könnten. Werden die Dichtungen nicht rechtzeitig ausgetauscht, besteht die Gefahr, dass trotzdem noch geringe Mengen des Probenmaterials in den Gehäusespalt eindringen. Dabei wird nicht nur als Nachteil empfunden, dass sich das Probenmaterial bzw. der Probenstaub dort ansammeln, schließlich aus dem zur Gehäuseaußenseite offenen Gehäusespalt herausdringen und auch außerhalb zu Verschmutzungen führen kann. Ein weiterer, aus Anwendungssicht gravierenderer Nachteil besteht darin, dass es bei wechselnden Probenmaterialien auch zur Kontamination und dadurch Beeinträchtigung einer nachfolgenden durch die vorherige Probe kommen kann.

Im Stand der Technik ist aus DE 29700 303 U1 eine gattungsgemäße Verschlusseinrichtung bekannt. Die dort beschriebene Vorrichtung bezweckt eine einfache Anpassbarkeit an unterschiedlichste erforderliche Dosiervolumen. US 2,805,836 und US 3,047,006 offenbaren Verschlusseinrichtungen, die einen Trennschieber und Reinigungskammern aufweisen. Auch hier stellt sich aber die Problematik von an dem Trennschieber anhaftenden Partikeln des Dosierguts. Aus US 4,060,183 ist eine Vorrichtung zur Portionierung von Gemüse-Rohmaterial bekannt, die ebenfalls Trennschieber aufweist.

Vor diesem Hintergrund liegt der Erfindung die Aufgabe zugrunde, eine Verschlusseinrichtung der eingangs genannten Art vorteilhaft weiterzubilden, so dass insbesondere die vorgenannten Nachteile möglichst weitgehend vermeidbar sind.

Die Aufgabe wird nach der Erfindung zunächst und im Wesentlichen in Verbindung mit den Merkmalen gelöst, dass eine Reinigungskammer ausgebildet ist, deren Kammerhöhe größer als die Spalthöhe des Führungsspalts ist, und die dem Trennschieber lagemäßig so zugeordnet ist, dass sich der Rand der Durchgangsöffnung in der Geschlossenstellung in der Reinigungskammer befindet. Der Erfindung liegt die Erkenntnis zugrunde, dass der Rand der (beispielsweise runden) Durchgangsöffnung im Trennschieber maßgeblich mit für die genannten Probleme verantwortlich ist, indem an der Randkante anliegende Partikel des Probenmaterials mit in den Spalt gelangen und sich hier entweder unkontrolliert lösen oder zum Teil anhaften bleiben, so dass es beim nächsten Dosiervorgang zur Verunreinigung einer Probe aus einem anderen Material kommen kann. Zur Beseitigung dieser Problematik wird nach der Erfindung erreicht, dass sich der Rand der Durchgangsöffnung bei jedem Bedienzyklus der Verschlusseinrichtung in der Geschlossenstellung automatisch in einer Reinigungskammer befindet, in der eine Reinigung von Materialresten möglich ist. In diesem Zusammenhang ist einerseits eine passive Reinigung möglich. Während des Zeitraumes, in dem sich der Rand der Durchgangsöffnung bzw. der entsprechende Längenabschnitt des Trennschiebers in der Reinigungskammer befindet, können sich anhaftende Probenpartikel im Laufe der Zeit selbständig oder bspw. auch im Zuge von Trocknung, Erschütterungen oder dergleichen lösen und werden von der Reinigungskammer aufgenommen. Andererseits können auch gezielt zu diesem Zweck Erschütterungen erzeugt oder ausgenutzt werden. Zum Beispiel kann an dem Trichter oder Füllkammergehäuse ein sog. Klopfer vorhanden sein, der den Trichter in Vibration versetzt und zur Abrüttelung des Probenstaubes dienen kann. Ein derartiger Klopfer kann auch zur Unterstützung der Ablösung von Probenpartikeln von dem Trennschieber in der Reinigungskammer verwendet werden. Dadurch, dass die Kammerhöhe größer als die Spalthöhe des Führungs- bzw. Gehäusespalts ist, können sich abgelöste Partikel dort sammeln, ohne dass die Gefahr besteht, dass die abgelösten Probenpartikel sogleich erneut in Kontakt mit dem Trennschieber kommen und ein Rücktransport in die Füllkammer erfolgt. Eine zur passiven Reinigung vorgesehene Reinigungskammer lässt sich zweckmäßig so gestalten, dass sie im Betrieb der Verschlusseinrichtung, abgesehen von ihrer Verbindung zum Führungs- bzw. Gehäusespalt, geschlossen berandet ist, so dass es daraus auch nach außen zu keinem unkontrollierten Austritt von Probenpartikeln kommen kann. Zur gezielten Entnahme und Entsorgung von angesammeltem Probenmaterial in gewünschten Intervallen (bspw. nach einer bestimmten Anzahl von Trenn- bzw. Dosiervorgängen) kann eine verschließbare Öffnung vorgesehen sein. Alternativ oder kombinativ können an Wandöffnungen der Reinigungskammer ein oder mehrere Leitungen zur gezielten Ableitung von Probenpartikeln angeschlossen sein.

Bevorzugt besteht, wie nachstehend noch näher ausgeführt wird, auch die Möglichkeit, dass die Reinigungskammer mit Einrichtungen für eine aktive Reinigung, vorzugsweise unter Verwendung von Reinigungsfluid (bspw. Druckluft) und / oder einer Absaugeinrichtung, ausgestattet ist.

Zur zweckmäßigen Ausgestaltung kann die Kammerhöhe ein Mehrfaches, vorzugsweise im Bereich des Drei- bis Zwanzig-Fachen, der Spalthöhe des Führungs- oder Gehäusespaltes betragen. Des Weiteren besteht die Möglichkeit, dass sich die Reinigungskammer unter- und / oder oberhalb des Führungsspaltes erstreckt, so dass der Trennschieber darin an seiner Unter- und / oder Oberseite frei liegt. Alternativ oder kombinativ kann die Füllkammer eine Mehrzahl von Trennschiebern (bzw. Verschlusseinrichtungen), vorzugsweise drei Trennschieber, aufweisen, die in Füllkammerlängsrichtung voneinander beabstandet angeordnet sind. Verläuft die Füllkammerlängsrichtung vertikal, resultiert eine Anordnung der vorzugsweise drei Trennschieber bzw. Verschlusseinrichtungen auf unterschiedlicher Höhe. Zur Dosierung stehen in diesem Beispiel wahlweise drei Dosierkammern zur Verfügung, nämlich wahlweise die von dem untersten und mittleren Trennschieber oder die von dem untersten und dem obersten Trennschieber oder die von dem mittleren und dem obersten Trennschieber berandete Dosierkammer, die vorzugsweise unterschiedliche Volumina aufweisen können. Dabei kommt jeweils dem unteren der beiden Trennschieber die Bedeutung zu, in der Geschlossenstellung einen Boden der Füllkammer und mit dem Durchlass der Offenstellung einen Auslass zur Probenentnahme zu bilden. Dem jeweils oberen der beiden eine Dosierkammer berandenden Trennschieber kommt die Bedeutung zu, in der Offenstellung einen oberseitigen Einlass zu bilden und bei der Schließbewegung durch das eingefüllte Füllgut hindurch als Dosierschieber die Dosierung vorzunehmen. Alternativ ist auch denkbar, den Boden der Füllkammer auf konstruktiv andere Weise auszubilden. Sind an einer Füllkammer mehrere Verschlusseinrichtungen bzw. Trennschieber vorgesehen, besteht die Möglichkeit, diesen jeweils eine Reinigungskammer zuzuordnen. Die Reinigungskammern können entweder voneinander unabhängig oder vorzugsweise miteinander verbunden sein, wobei eine Verbindung bspw. mittels sich durch das Gehäuse erstreckender Hohlräume, Leitungen oder dergleichen möglich ist.

Zur aktiven Reinigung des Trennschiebers in der Reinigungskammer bestehen verschiedene Möglichkeiten. Bevorzugt ist, dass die Reinigungskammer zu diesem Zweck mit zumindest einem Fluidanschluss ausgestattet ist. In einer ersten zweckmäßigen Ausführung kann dieser mit einer Absaugeinrichtung verbunden sein, mittels der sich das in der Kammer befindliche Fluid (bspw. Luft) mittels des erzeugten Unterdrucks absaugen lässt. Durch die Absaugströmung werden auch an dem Trennschieber und ggf. an den Kammerwänden angelagerte Probenpartikel mit abgesaugt und können mit dem als Träger dienenden Fluid abtransportiert, z.B. mittels eines Filters abgeschieden und entsorgt werden. Um die Reinigungswirkung noch zu verstärken, kann die Reinigungskammer eine die Erzeugung von Verwirbelungen bzw. Turbulenzen unterstützende Formgebung oder Einbauten (bspw. Fluid-Leitstege) aufweisen. Weiter kann es in Verbindung mit einer Absaugung zweckmäßig sein, dass die Reinigungskammer zum Druckausgleich eine fluidmäßige Verbindung (bspw. Verbindungsleitung) zur Umgebung aufweist, um die Saugströmung über längere Zeit erhalten zu können. Alternativ oder kombinativ kann die Reinigungskammer zumindest einen Fluidanschluss aufweisen, der mit einer Zufuhreinrichtung für ein Reinigungsfluid, bspw. für Druckluft oder denkbar auch für eine Flüssigkeit, verbunden ist. Auch dadurch können Probenpartikel vom Trennschieber, insbesondere von dessen Öffnungsrand, und den Kammerwänden aktiv entfernt und schließlich vorzugsweise durch einen Auslass der Reinigungskammer, bspw. mittels einer Absaugeinrichtung, abgeführt werden. Zweckmäßig besteht die Möglichkeit, dass in die Reinigungskammer Druckluft von oben eingeblasen und von unten Luft mit den aufgewirbelten Probenpartikeln abgesaugt wird, allerdings wäre auch eine umgekehrte Zuordnung möglich. Eine bevorzugte Ausgestaltung wird darin gesehen, dass dem Trennschieber zwei mit einer Zufuhreinrichtung für ein Reinigungsfluid, bspw. für Druckluft, verbundene Fluidaustrittsöftnungen zugeordnet sind, von denen je eine Fluidaustrittsöffnung in Verschieberichtung des Trennschiebers vor und hinter dem Hohlquerschnitt der Füllkammer angeordnet und auf den Trennschieber gerichtet. Sind mehrere Trennschieber bzw. Verschlusseinrichtungen vorgesehen und deren Reinigungskammern miteinander verbunden, kann eine oder mehrere, vorzugsweise jede Reinigungskammer einen eigenen Fluidanschluss zur Zufuhr von Reinigungsfluid aufweisen, während die Reinigungskammern vorzugsweise einen gemeinsamen, im Bereich der untersten Reinigungskammer angeordneten Fluidanschluss zu einer Absaugeinrichtung aufweisen.

Eine bevorzugte Ausgestaltung wird auch darin gesehen, dass die Reinigungskammer von dem Füllkammergehäuse oder von einem oder mehreren die Füllkammer berandenden Gehäuseteilen umschlossen wird. Dies ermöglicht eine platzsparende Bauweise, und die kurzen Transportwege der Probenpartikel tragen zur leichten Reinigung und Abfuhr des Probenstaubs bei. Alternativ besteht die Möglichkeit, dass die Reinigungskammer zumindest teilweise außerhalb des Füllkammergehäuses angeordnet ist. Beispielsweise kann das Füllkammergehäuse mit gewissem Abstand von einem Außengehäuse einer Probendosiervorrichtung umgeben und die Reinigungskammer im Gehäusezwischenraum vorgesehen sein.

Um die Gefahr der Mitnahme von Probenpartikeln durch den Trennschieber noch weiter zu verringern, besteht gemäß einem weiteren Aspekt, dem im Rahmen der Erfindung sowohl als Weiterbildung als auch eigenständig Bedeutung zukommen kann, die Möglichkeit, dass der Trennschieber mit einer speziellen Oberflächenbeschichtung versehen ist. So besteht die Möglichkeit, dass der Trennschieber mit einer Antihaftbeschichtung, vorzugsweise mit einem Nano-Lack, beschichtet ist. Der durch einen solchen Lack bewirkte sog. Lotusblüten-Effekt erschwert bereits die Anhaftung von Probenpartikeln. Alternativ oder kombinativ besteht die Möglichkeit, dass der Trennschieber mit einer Antistatikbeschichtung, welche vorzugsweise von Kohlenstoff-Teilchen durchsetzt ist, beschichtet ist. Durch die damit erzielte elektrische Leitfähigkeit der Trennschieberoberfläche kann die anziehende Wirkung auf elektrostatisch aufgeladenen Probenstaub verringert werden. Gemäß einem noch weiteren Aspekt, der ebenfalls als Weiterbildung oder eigenständig Bedeutung haben kann, besteht die Möglichkeit, dass sich das Randprofil der Durchgangsöffnung des Trennschiebers zur Öffnungsmitte hin, vorzugsweise unter Ausbildung einer Ringschneide, verjüngt. Dies bewirkt, dass das Probenmaterial beim Schließen des Trennschiebers von der scharfen Randkante der Durchgangsöffnung quasi durchschnitten wird, wodurch einerseits die Schließkraft und andererseits auch die Neigung zur Anlagerung und Mitnahme von Probenpartikeln verringert wird. Alternativ oder kombinativ ist eine zweckmäßige Weiterbildung auch dadurch möglich, dass das Füllkammergehäuse mehrere Gehäuseteile aufweist, deren Verbindungsflächen Vertiefungen als Bestandteil von Reinigungskammern bilden. Wird ein solches Gehäuse zur Wartung zerlegt, resultiert eine unmittelbare Zugänglichkeit der Reinigungskammern.

Auch in Bezug auf die Füllkammer selbst besteht die Möglichkeit, dass diese zumindest einen, vorzugsweise im oberen Kammerbereich mündenden Fluidanschluss aufweist, der mit einer Zufuhreinrichtung für ein Reinigungsfluid, insbesondere für Druckluft oder eine Flüssigkeit oder dergleichen, verbunden ist. Alternativ oder kombinativ kann die Füllkammer zumindest einen, vorzugsweise im unteren Kammerbereich mündenden, Fluidanschluss aufweisen, der mit einer Absaugeinrichtung verbunden ist. Die Erfindung betrifft auch eine Probendosiervorrichtung, aufweisend zumindest eine erfindungsgemäße Verschlusseinrichtung.

Die Erfindung betrifft des Weiteren ein Verfahren zum Betrieb einer Verschlusseinrichtung, insbesondere einer Probendosiervorrichtung, welche einzelne oder mehrere der zuvor beschriebenen Merkmale aufweisen kann. Die Erfindung schlägt vor, dass die Reinigungskammer zur Entfernung von Probenmaterial nach einer Anzahl, vorzugsweise automatisch nach einer bestimmten bspw. einstellbaren Mehrzahl, von Betätigungen des Trennschiebers mit einem Reinigungsfluid durchströmt wird und / oder aus der Reinigungskammer Fluid abgesaugt wird. Als Reinigungsfluid eignen sich verschiedenste Gase und Flüssigkeiten, die der Reinigungskammer vorzugsweise unter Druck zugeführt werden können. Durch die dabei in der Reinigungskammer entstehende Strömung, vorzugsweise turbulente Strömung, und die Verwirbelungen werden an dem Trennschieber und den Kammerwänden angelagerte Probenmaterialpartikel mittels des Fluids abgelöst und können von diesem zugleich als Trägermedium abtransportiert werden. Bevorzugt ist an die Verwendung von Druckluft als Reinigungsfluid gedacht, es können aber auch andere Fluide Verwendung finden. Auch für den Fall, dass kein Druckfluid zugeführt, jedoch die in der Reinigungskammer vorhandene und ggf. durch Ausgleichsöffnungen nachströmende Luft abgesaugt wird, lassen sich für die Reinigung und den Abtransport von Probenmaterialresten geeignete Strömungen erzeugen. Anstelle einer diskontinuierlichen Reinigung ist auch eine kontinuierliche Reinigung denkbar, indem die Reinigungskammer zur Entfernung von Probenmaterial laufend mit einem Reinigungsfluid, vorzugsweise mit Druckluft, durchströmt wird und / oder laufend aus der Reinigungskammer Fluid abgesaugt wird. Analog besteht auch die Möglichkeit, dass die Füllkammer zur Entfernung von Probenmaterialresten nach der Entleerung des Probenmaterials mit einem Reinigungsfluid, vorzugsweise mit Druckluft, durchströmt wird und / oder aus der Füllkammer Fluid abgesaugt wird. Vorzugsweise kann in die Füllkammer von oben Druckluft eingeblasen und von unten, bspw. mit einem Saugrüssel, abgesaugt werden.

Die Erfindung wird nachfolgend mit Bezug auf die beigefügten Figuren, welche bevorzugte Ausführungsbeispiele zeigen, näher beschrieben. Darin zeigt:
- Fig. 1: perspektivisch eine Probendosiervorrichtung mit daran verwirklichter erfindungsgemäßer Verschlusseinrichtung gemäß einer bevorzugten Ausführungsform,
- Fig. 2: die in Fig. 1 gezeigte Probendosiervorrichtung, aus der zur Veranschaulichung des inneren Aufbaues ein Gehäuseumfangssegment herausgeschnitten ist,
- Fig. 3: eine Draufsicht in Blickrichtung 3 nach Fig. 1,
- Fig. 4: einen Teilschnitt entlang Linie IV - IV nach Fig. 3,
- Fig. 5: einen Teilschnitt entlang Linie V - V nach Fig. 3,
- Fig. 6: eine Ausschnittsvergrößerung von Detail VI aus Fig. 4,
- Fig. 7: eine Fig. 6 analoge Darstellung, jedoch betreffend eine alternative Ausführungsform des Trennschiebers,
- Fig. 8: eine perspektivische Explosionsdarstellung mehrerer Gehäuseteile des Füllkammergehäuses mit Blickrichtung von schräg oben,
- Fig. 9: eine zu Fig. 8 analoge Darstellung, jedoch mit Blickrichtung von schräg unten,
- Fig. 10: perspektivisch den Trennschieber gemäß Fig. 1,

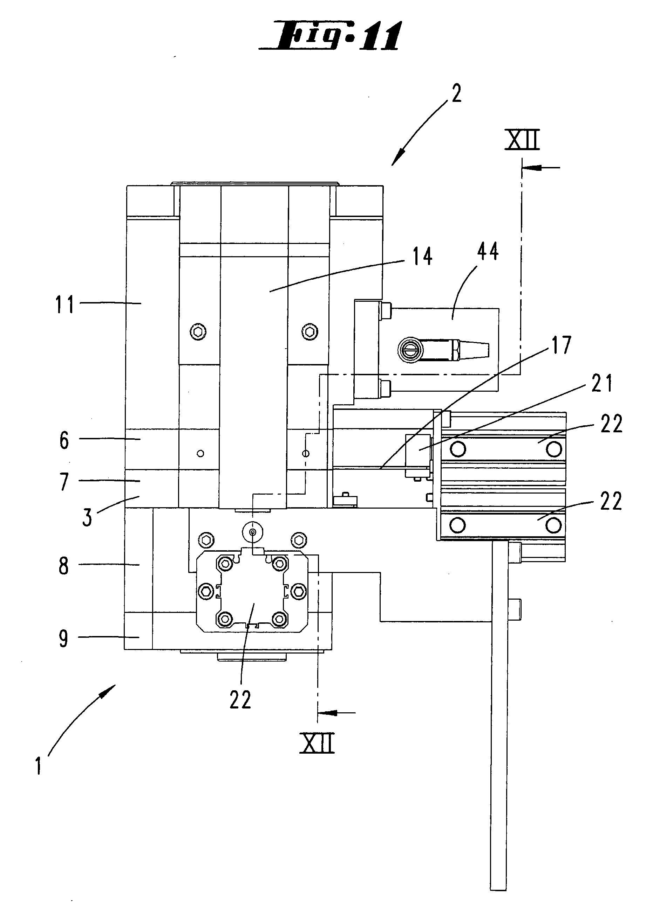

- Fig. 11: eine Seitenansicht der Probendosiervorrichtung in Blickrichtung XI nach Fig. 1 und
- Fig. 12: zur weiteren Veranschaulichung eine perspektivische Ansicht mit Teilschnitt entlang Schnittlinie XII - XII gemäß Fig. 11.

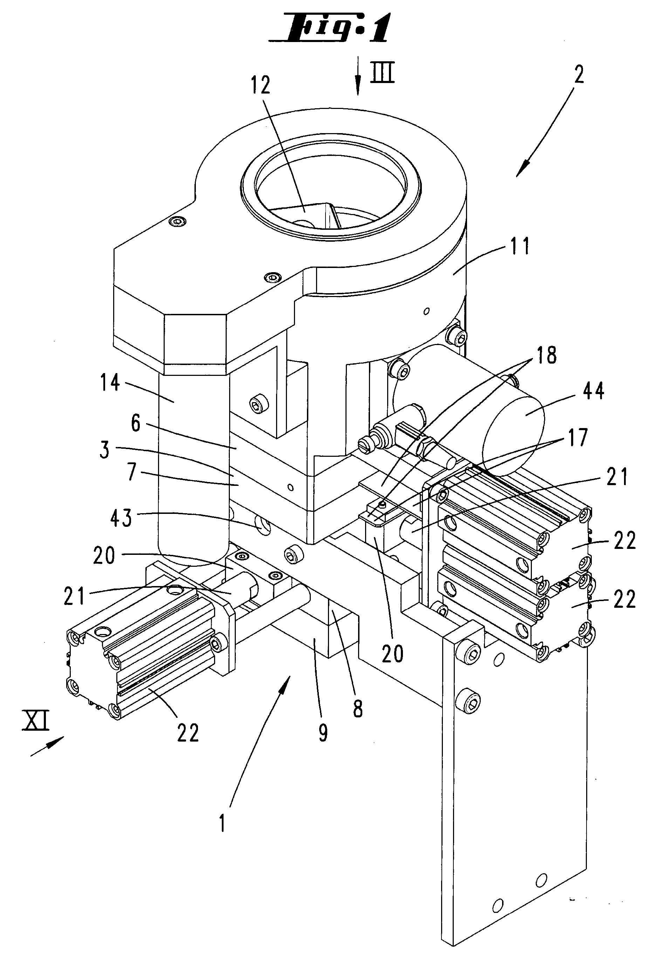

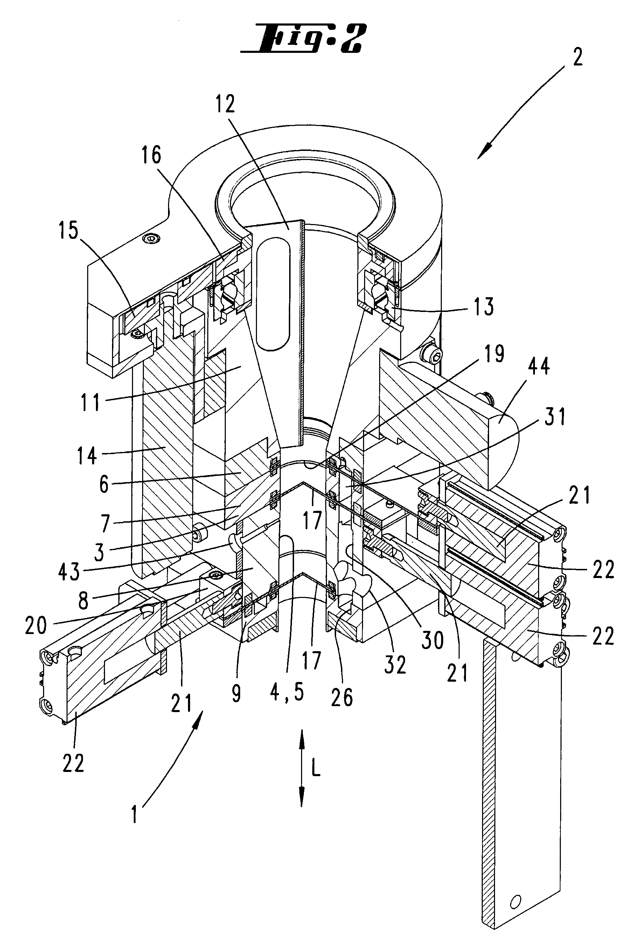

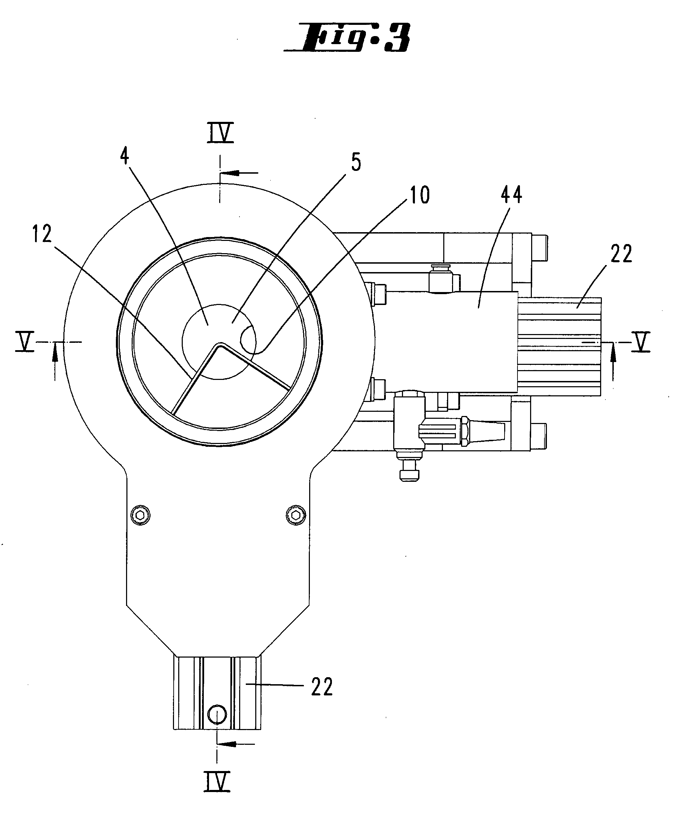

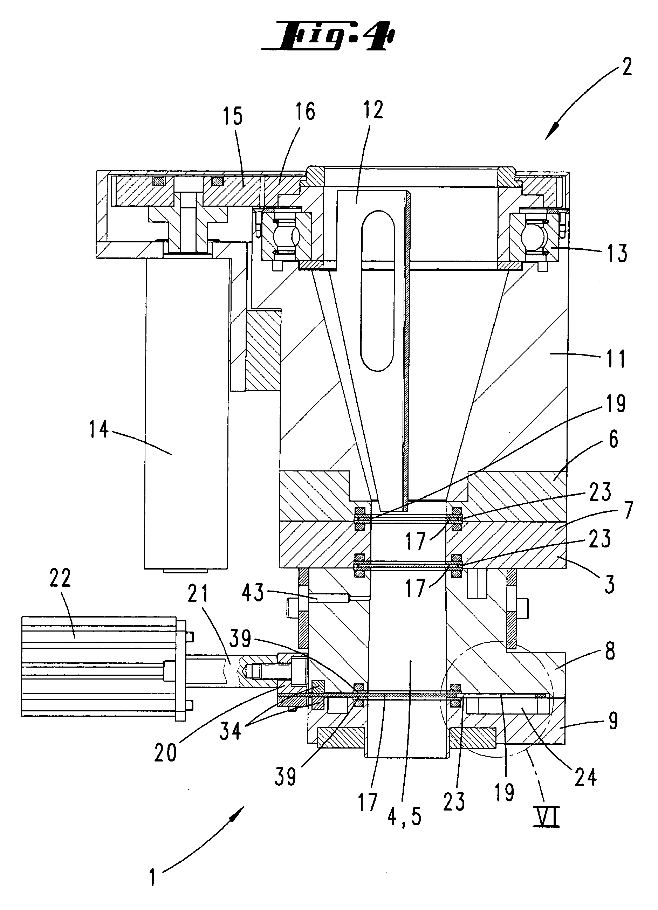

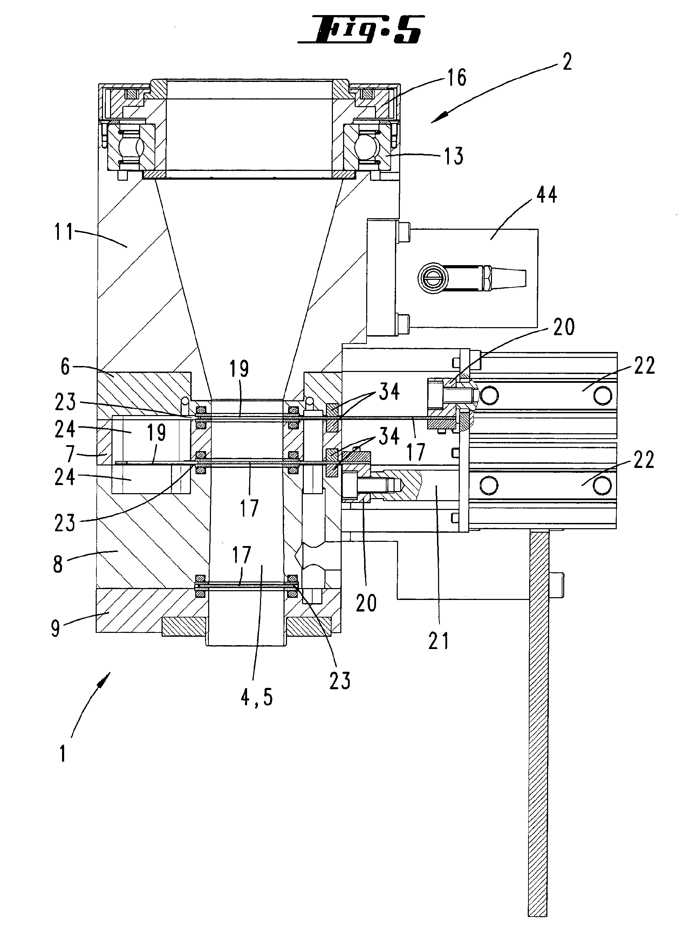

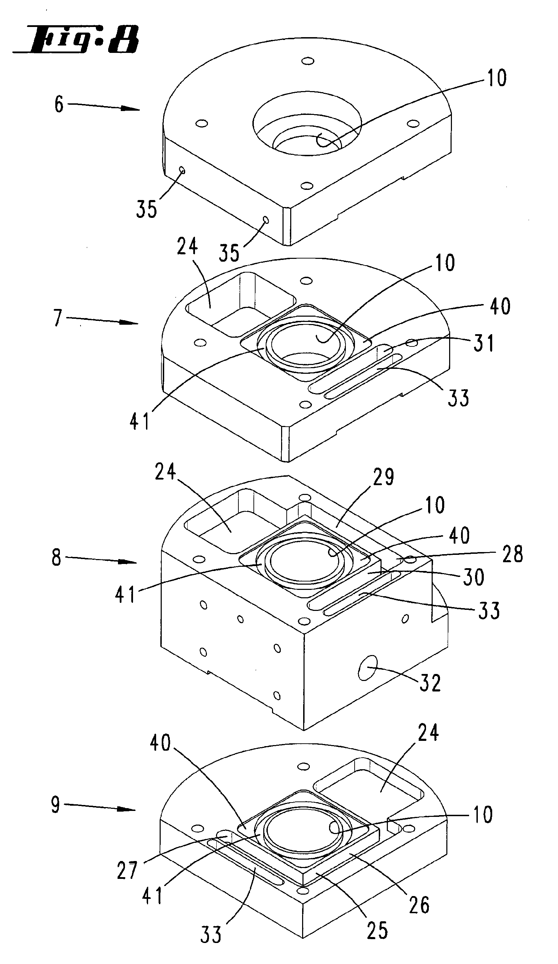

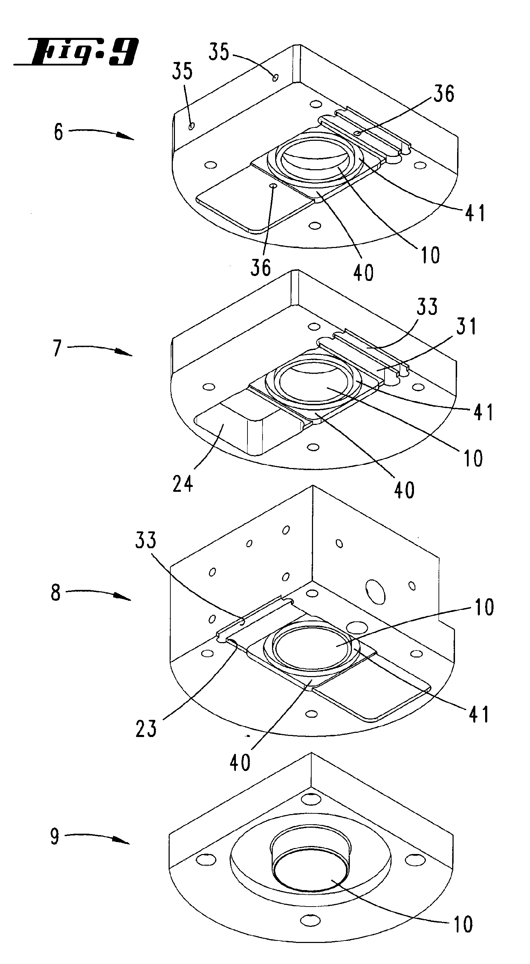

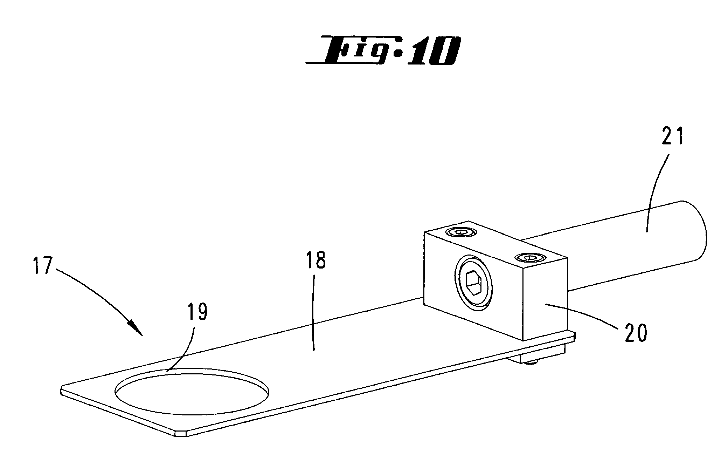

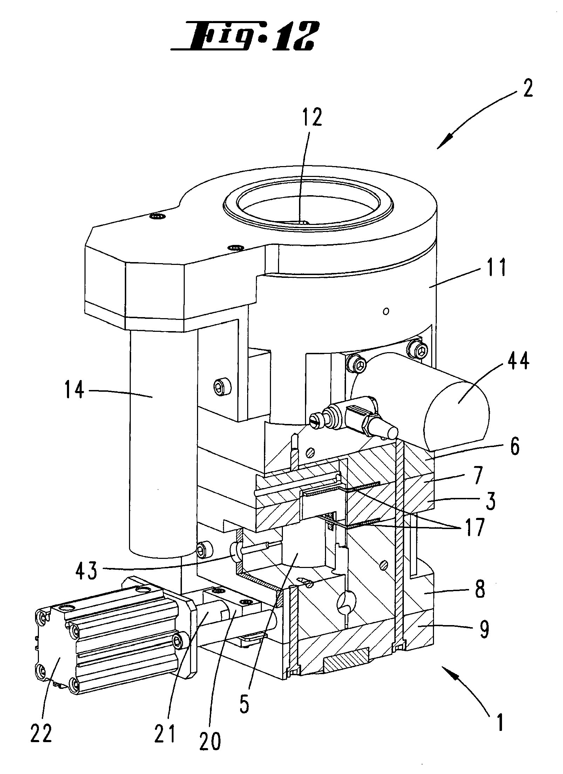

Die Figuren 1 und 2 zeigen perspektivisch die erfindungsgemäße Verschlusseinrichtung 1 gemäß einer bevorzugten Ausführungsform als Bestandteil einer erfindungsgemäßen Probendosiervorrichtung 2. Diese besitzt im unteren Abschnitt ein Füllkammergehäuse 3, das in seinem Inneren eine in dem Beispiel zylindrische, d.h. einen runden Hohlquerschnitt 4 besitzende Füllkammer 5 berandet, deren Füllkammerlängsrichtung L sich senkrecht erstreckt. Wie auch die Figuren 8, 9 veranschaulichen, weist das Füllkammergehäuse 3 in dem gewählten Beispiel mehrere scheibenartige Gehäuseteile 6, 7, 8 und 9 auf, die bezüglich ihrer runden durchgehenden und etwas mittigen Öffnungen 10, welche die Füllkammer beranden, fluchtend miteinander verschraubt (vgl. dazu Fig. 12) sind. Auf dem obersten Gehäuseteil 6 ist ein sich nach unten hin verjüngender Einfülltrichter 11 montiert. In diesen ist ein im Querschnitt L-profilartiges Rührelement 12 mittels eines Kugellagers 13 drehbar eingesetzt. Mittels eines auch in Fig. 2 schematisch dargestellten Motors 14, dessen Zahnritzel 15 in einen mit dem Rührelement 12 verbundenen Zahnkranz 16 eingreift, kann das Rührelement 12 motorisch drehangetrieben werden. Bei dem gewählten Ausführungsbeispiel weist die Verschlusseinrichtung 1 drei Trennschieber 17 auf, die entlang der Füllkammerlängsrichtung L voneinander beabstandet, d.h. in unterschiedlicher Höhe angeordnet sind, wobei der Abstand zwischen den beiden oberen Trennschiebern geringer als der Abstand zwischen den beiden unteren Trennschiebern ist. Wie Fig. 10 verdeutlicht, weist der Trennschieber 17 eine langgestreckte, insgesamt rechteckige Schieberplatte 18 auf (in dem gewählten Beispiel ein Edelstahlblech von 1,5 Millimeter Dicke), die in ihrem vorderen Längenabschnitt eine in dem gewählten Beispiel (jedoch nicht notwendig) kreisrunde Durchgangsöffnung 19 aufweist. An dem gegenüberliegenden bzw. hinteren Längsende ist die Schieberplatte in einer Schraubeinspannung 20 eingespannt, die ihrerseits mit einer Kolbenstange 21 starr verbunden ist. Ein jeweiliger Kolben 21 ist endseitig längsverschieblich in je einem von außen an dem Füllkammergehäuse 3 angebrachten Druckzylinder 22 aufgenommen. Jeder Trennschieber 17 kann in dem Füllkammergehäuse in einem Führungsspalt 23 (vgl. Figuren 4 - 7) quer zu der Füllkammerlängsrichtung L zwischen einer in Verschieberichtung von dem Zylinder 22 aus hinteren Offenstellung und vorderen Geschlossenstellung mittels der Kolben- / Zylindereinheit verschoben werden. Die Durchgangsöffnung 19 des Trennschiebers 17 besitzt in dem gewählten Beispiel den gleichen Durchmesser wie die Öffnung 10 der Gehäuseteile 6 - 9 und ist in der Offenstellung fluchtend zu der Öffnung 10 ausgerichtet, so dass ein stufenloser Durchlass gebildet wird. Diese Offenstellung ist z.B. in den Figuren 2, 5 für den oberen Trennschieber 17 dargestellt. In der Geschlossenstellung, die in den Figuren lediglich exemplarisch für die beiden unteren Trennschieber 17 dargestellt ist, ist der Kolben 21 aus dem Zylinder 22 ausgefahren, so dass der geschlossene Längenabschnitt der Schieberplatte, der sich zwischen der Durchgangsöffnung 19 und der Schraubeinspannung 20 erstreckt, den Hohlquerschnitt 4 der Füllkammer vollständig verschließt. Es versteht sich, dass zur Verschiebebewegung der Trennschieber 17 anstelle der Kolben- / Zylindereinheiten auch alternative Antriebe, wie bspw. Elektromotoren, geeignet wären. Insbesondere aus den Figuren 2, 3 geht auch hervor, dass in dem gewählten Beispiel (d.h. nicht notwendig) die beiden oberen Trennschieber in die gleiche Richtung verschieblich sind, während der unterste Trennschieber 17 in eine dazu orthogonale Richtung verschoben werden kann. Wie die Figuren 4 - 6 zeigen, ist jedem Trennschieber 17 erfindungsgemäß eine Reinigungskammer 24 zugeordnet, die an den Führungs- bzw. Gehäusespalt 23 anschließt und deren Kammerhöhe K ein Vielfaches der Spalthöhe S beträgt. Eine jede Reinigungskammer 24 ist ihrem Trennschieber 17 lagemäßig derart zugeordnet, dass sich der Rand der Durchgangsöffnung 19 in der Geschlossenstellung innerhalb der Reinigungskammer 24 befindet. Die Ausführung der Reinigungskammern 24 ist in aller Einzelheit den Figuren 8, 9 in Verbindung mit den Figuren 2, 5 entnehmbar. Aus Fig. 8 geht hervor, dass die untere Reinigungskammer 24 in der Ebene von Gehäuseteil 9 einen nutartigen L-Fortsatz 25 mit zwei Schenkeln 26, 27 ausbildet. In dem Gehäuseteil 8 bildet die Reinigungskammer 24 einen zu dem L-Fortsatz 25 um 90° drehversetzten nutartigen L-Fortsatz 28 mit den Schenkeln 29, 30 aus. In dem Gehäuseteil 7 ist die Reinigungskammer 24 nicht als Vertiefung, sondern als Durchgangsöffnung ausgebildet und auf der gegenüberliegenden Seite der Öffnung 10 eine weitere, langlochartige Durchgangsöffnung 31 vorgesehen. Auch bei dem Schenkel 30 in Bauteil 8 handelt es sich (anders an bei dem Schenkel 29) um eine senkrecht verlaufende Durchgangsöffnung. Wie in Verbindung mit den Figuren 2 und 5 deutlich wird, ist der Schenkel 30 bzw. dessen schlanke, vertikal verlaufende Durchgangsöffnung mit einem Fluidanschluss 32 zur Durchleitung eines Fluids verbunden. Der Fluidanschluss 32 ist vereinfachend als Bohrung dargestellt und dient zum Anschluss an eine in den Zeichnungen nicht wiedergegebene Absaugeinrichtung, mit der sich durch die Erzeugung eines Unterdrucks Fluid absaugen lässt. Des Weiteren geht der Schenkel 30 bzw. die entsprechende Durchgangsöffnung an der Oberseite in die Öffnung 31 und an der Unterseite in den Schenkel 26 über. Auch die zur Aufnahme der Öffnungsrandbereiche der Trennschieber 17 in der Geschlossenstellung dienenden großflächigen Bereiche der Reinigungskammern 24 in den Gehäuseteilen 7, 8 grenzen wandlos aneinander. Daraus folgt, dass die drei den Trennschiebern 17 zugeordneten Reinigungskammern 24 sämtlich mittels Höhlräumen miteinander in Verbindung stehen. Der Fluidanschluss 32 kann demzufolge dazu dienen, um zentral Fluid, vorzugsweise die darin eingeschlossene Luft, aus allen Reinigungskammern 24 abzusaugen. Aus der erläuterten Ausgestaltung der Reinigungskammern 24 folgt weiter, dass die Strömung, die zum Reinigen von Trennschieber und Kammerwänden dient, nicht nur in den Bereichen der Kammern 24 wirkt, in denen sich der Rand der Durchgangsöffnung 18 in der Geschlossenstellung befindet. Vielmehr stellen auch die von den Schenkeln 27, 30 und 31 gebildeten Reinigungskammerbereiche, die sich auf der bezüglich der Öffnungen 10 gegenüberliegenden Gehäuseseite, d.h. zwischen der Füllkammer 5 und den paarweise in Langlöcher 33 eingesetzten Abstreifelementen 34 befinden, reinigungswirksame Bereiche dar. Bei den Abstreifern 34 handelt es sich in dem gewählten Beispiel um Polyurethan-Formteile. In den Figuren 8, 9 ist angedeutet, dass in dem gewählten Ausführungsbeispiel das an den obersten Trennschieber 17 angrenzende Gehäuseteil 6 zwei seitliche Fluidanschlüsse 35 aufweist, von denen je eine leitungsmäßig mit je einer Fluidaustrittsöffnung 36 an der Unterseite von Gehäuseteil 6 verbunden ist. Die vereinfachend nur als Bohrung gezeigten Fluidanschlüsse 35 sind auf nicht dargestellte Weise mit einer Zufuhreinrichtung für ein Reinigungsfluid, in dem gewählten Beispiel für Druckluft, verbunden. Die Druckluft kann durch je eine Austrittsöffnung 36 in den in Verschieberichtung vor und hinter der Füllkammer liegenden Teil der Reinigungskammer 24 eingeblasen werden. Da die drei Reinigungskammern 24 in dem gewählten Beispiel miteinander verbunden sind, kann sich die durch die Anschlüsse 35 zugeführte Druckluft in sämtlichen Kammern verteilen und daran und an den drei Trennschiebern anhaftenden Staub des Probenmaterials aufnehmen, um dann durch den Fluidanschluss 32 abgesaugt und entsorgt zu werden.

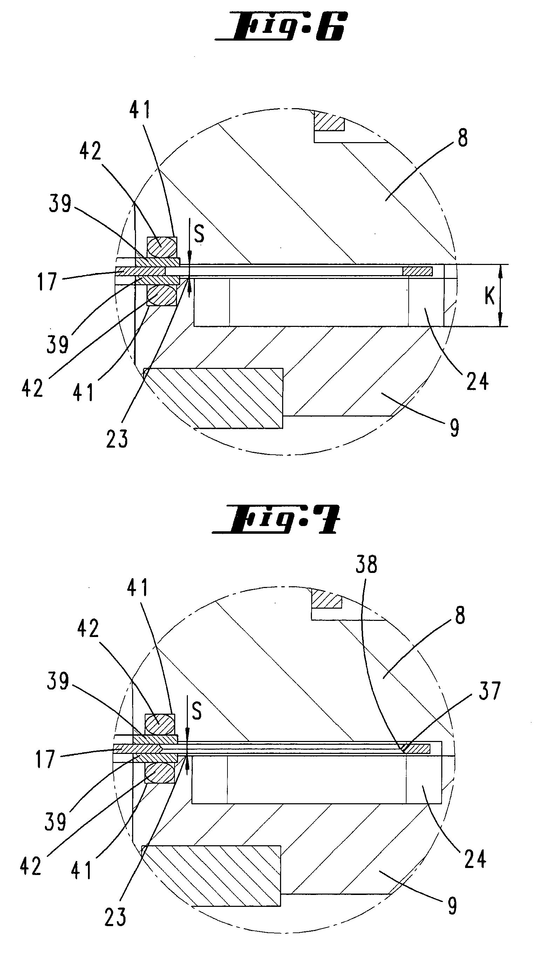

Fig. 7 zeigt anhand einer Ausschnittsvergrößerung eine weitere vorteilhafte Ausführungsvariante des Trennschiebers 17. Demgemäß verjüngt sich das Randprofil 37 der Durchgangsöffnung 18 des Trennschiebers 17 zur Mitte der Durchgangsöffnung hin, so dass eine Ringschneide 38 mit in dem gezeigten Beispiel gleichschenklig abgeschrägten Schneidenflanken entsteht.

Die Figuren 4 - 9 zeigen, dass den jeweiligen Trennschiebern 17 jeweils zur oberen und unteren Anlage ein Paar Flachdichtungen 39 zugeordnet ist. Bei diesen Flachdichtungen kann es sich bspw. um Glasfiberdichtungen oder um Dichtungen aus anderen Materialien, bspw. auch um sog. Hybrid-Dichtungen aus verschiedenen Materialien zur Verlängerung der Standzeit auch gegenüber abrasiven Medien, handeln. Geeignet sind auch Dichtungen aus GFK, insbesondere aus glasfaserverstärktem Epoxydharz oder glasfaserverstärktem Polyesterharz, oder bspw. Dichtungen aus gepresstem Schichtstoff. In dem in den Figuren gewählten Ausführungsbeispiel besitzen die Flachdichtungen 39 eine runde Mittenöffnung, deren Durchmesser dem der Öffnung 10 entspricht und sind am Öffnungsumfang durchlaufend ausgebildet. Die viereckige Außenkontur ist in dem Beispiel der quadratischen Berandung von zur Aufnahme dienenden Vertiefungen 40 in den Gehäuseteilen 6 - 9 angepasst. In dem gezeigten Ausführungsbeispiel dient zum Andrücken der Flachdichtungen 39 gegen den Trennschieber 17 jeweils ein in eine Ringnut 41 eingelegter O-Ring 42 aus elastischem Material. Alternativ zu den O-Ringen könnten auch geschäumte oder gedichtete Passstücke aus Moosgummi, Polyurethan-Formteile oder dergleichen eingesetzt werden. Bei dem mit Bezug auf die Figuren beschriebenen Ausführungsbeispiel sind die Reinigungskammern 24 der Trennschieber 17, obwohl die beiden oberen zueinander parallelen Trennschieber senkrecht zu dem unteren Trennschieber verfahrbar sind, wie beschrieben fluidmäßig miteinander verbunden. Es versteht sich, dass die Trennschieber auch davon abweichende Ausrichtungen bzw. Verschieberichtungen (bspw. alle in die gleiche Richtung) aufweisen können. Auch fällt in den Rahmen der Erfindung, dass nur Einzelne von mehreren Reinigungskammern miteinander verbunden sind oder dass keinerlei Verbindung zwischen den Reinigungskammern besteht. Insbesondere in letzterem Fall kann jede gewünschte Reinigungskammer mit einem gesonderten Fluidanschluss zur Zufuhr von Reinigungsfluid und / oder mit einem gesonderten Fluidanschluss an eine Absaugeinrichtung ausgestattet sein.

Aus den Figuren 1, 2 und 4 geht hervor, dass in dem Beispiel auch die Füllkammer 5 einen unterhalb des mittleren Trennschiebers 17 mündenden Fluidanschluss 43 aufweist, der mit einer nicht mit dargestellten Zufuhreinrichtung für ein Reinigungsfluid, in dem Beispiel für Druckluft, verbunden ist. Alternativ könnte dieser Fluidanschluss zum Anschluss einer Absaugeinrichtung dienen, oder es könnten mehrere separate Fluidanschlüsse vorgesehen werden.

Bei der in den Figuren gewählten Bauform können mit den drei Trennschiebern 17 zur Dosierung von rieselfähigem Schüttgut drei unterschiedlich große Dosierkammern realisiert werden. Wenn der unterste Trennschieber als öffenbarer Dosierkammerboden dient, kann zur Dosierung einer vergleichsweise geringeren Probenmenge der mittlere Trennschieber, alternativ zur Dosierung einer größeren Probenmenge der oberste Trennschieber Verwendung finden. Alternativ kann der mittlere Trennschieber 17 den Dosierkammerboden bilden und der oberste Trennschieber zur Dosierung einer vergleichsweise geringsten Probenmenge dienen. Bei dem in den Figuren 1 - 3 und 12 gezeigten, an den Trichter bzw. an das Füllkammergehäuse angesetzten Aggregat 44 handelt es sich um einen sog. Klopfer. Dieser versetzt den Trichter in Vibration und dient zur Abrüttelung des Probenstaubes, kann aber auch zur unterstützenden Ablösung von Probenmaterial von dem Trennschieber innerhalb der Reinigungskammer 24 eingesetzt werden.

## Patentansprüche

1. Verschlusseinrichtung (1), insbesondere für eine Probendosiervorrichtung (2) zur Dosierung von Probenmaterial aus rieselfähigem Schüttgut, umfassend ein Füllkammergehäuse (3) oder zumindest ein Gehäuseteil (6, 7, 8, 9), das einen Hohlquerschnitt einer Füllkammer (5) berandet, und umfassend zumindest einen eine Durchgangsöffnung (19) aufweisenden Trennschieber (17), der durch einen Führungsspalt (23) quer zu einer Füllkammerlängsrichtung (L) zwischen einer Offenstellung und einer Geschlossenstellung verschieblich ist, wobei der Trennschieber (17) in der Offenstellung mit seiner Durchgangsöffnung (19) einen Durchlass eines Füllkammerquerschnitts bildet und der Trennschieber (17) in der Geschlossenstellung den Füllkammerquerschnitt verschließt, wobei eine Reinigungskammer (24) ausgebildet ist, deren Kammerhöhe (K) größer als die Spalthöhe (S) des Führungsspalts (23) ist, und die dem Trennschieber (17) lagemäßig so zugeordnet ist, dass sich der Rand der Durchgangsöffnung (19) in der Geschlossenstellung in der Reinigungskammer (24) befindet, wobei entlang der Füllkammer (5) beabstandet eine Mehrzahl von Trennschiebern (17) angeordnet sind und mehreren Trennschiebem (17) jeweils eine Reinigungskammer (24) zugeordnet ist, **dadurch gekennzeichnet, dass** mehrere Reinigungskammern (24) miteinander verbunden sind.

2. Verschlusseinrichtung (1) gemäß Anspruch 1, **dadurch gekennzeichnet, dass** entlang der Füllkammer (5) beabstandet drei Trennschieber (17) angeordnet sind.

3. Verschlusseinrichtung (1) gemäß einem oder beiden der Ansprüche 1 und 2, **dadurch gekennzeichnet, dass** sämtliche Reinigungskammern (24) miteinander verbunden sind.

4. Verschlusseinrichtung (1) nach Anspruch 1, **dadurch gekennzeichnet, dass** die Kammerhöhe (K) ein Mehrfaches, insbesondere im Bereich des Dreibis Zwanzig-Fachen, der Spalthöhe (S) des Führungsspalts (23) beträgt.

5. Verschlusseinrichtung nach einem oder mehreren der vorangehenden Ansprüche, **dadurch gekennzeichnet, dass** sich die Reinigungskammer (24), die gemäß Oberbegriff von Anspruch (1) dem zumindest einen Trennschieber (17) zugeordnet ist, unter- und/oder oberhalb des Trennschiebers (17) erstreckt.

6. Verschlusseinrichtung (1) nach einem oder mehreren der vorangehenden Ansprüche, **dadurch gekennzeichnet, dass** zumindest eine Reinigungskammer (24) mit zumindest einem Fluidanschluss (32, 35) ausgestattet ist.

7. Verschlusseinrichtung (1) nach Anspruch 6, **dadurch gekennzeichnet, dass** die Reinigungskammer (24) zumindest einen Fluidanschluss (32) aufweist, der mit einer Absaugeinrichtung verbunden ist, und/oder dass die Reinigungskammer (24) zumindest einen Fluidanschluss (35) aufweist, der mit einer Zufuhreinrichtung für ein Reinigungsfluid, insbesondere für Druckluft, verbunden ist.

8. Verschlusseinrichtung (1) nach einem oder mehreren der vorangehenden Ansprüche, **dadurch gekennzeichnet, dass** dem Trennschieber (17) zwei mit einer Zufuhreinrichtung für ein Reinigungsfluid, insbesondere für Druckluft, verbundene Fluidaustrittsöffnungen (36) zugeordnet sind, von denen je eine Fluidaustrittsöffnung (36) in Verschieberichtung vor und hinter dem Hohlquerschnitt der Füllkammer (5) angeordnet ist.

9. Verschlusseinrichtung (1) nach einem oder mehreren der vorangehenden Ansprüche, **dadurch gekennzeichnet, dass** von den mehreren miteinander verbundenen Reinigungskammern (24) eine oder mehrere, insbesondere jede Reinigungskammer (24), zumindest einen eigenen Fluidanschluss (35) zur Zufuhr von Reinigungsfluid aufweist und dass die miteinander verbundenen Reinigungskammern (24) zumindest einen gemeinsamen, insbesondere im Bereich der untersten Reinigungskammer (24) angeordneten, Fluidanschluss (32) zu einer Absaugeinrichtung aufweisen.

10. Verschlusseinrichtung (1) nach einem oder mehreren der vorangehenden Ansprüche, **dadurch gekennzeichnet, dass** die Reinigungskammern (24) von dem Füllkammergehäuse (3) oder von Füllkammergehäuseteilen (6, 7, 8, 9) umschlossen werden.

11. Verschlusseinrichtung (1) nach einem oder mehreren der vorangehenden Ansprüche, **dadurch gekennzeichnet, dass** die Reinigungskammer (24) zumindest teilweise außerhalb des Füllkammergehäuses (3) oder der Füllkammergehäuseteile (6, 7, 8, 9) angeordnet ist.

12. Verschlusseinrichtung (1) nach einem oder mehreren der vorangehenden Ansprüche, **dadurch gekennzeichnet, dass** der gemäß Oberbegriff von Anspruch 1 zumindest eine Trennschieber (17) mit einer Antihaftbeschichtung, insbesondere mit einem Nano-Lack, beschichtet ist.

13. Verschlusseinrichtung (1) nach einem oder mehreren der vorangehenden Ansprüche, **dadurch gekennzeichnet, dass** der gemäß Oberbegriff von Anspruch 1 zumindest eine Trennschieber (17) mit einer Antistatikbeschichtung, welche insbesondere Kohlenstoffpartikel aufweist, beschichtet ist.

14. Verschlusseinrichtung (1) nach einem oder mehreren der vorangehenden Ansprüche, **dadurch gekennzeichnet, dass** sich das Randprofil der Durchgangsöffnung (18) des gemäß Oberbegriff von Anspruch 1 zumindest einen Trennschiebers (17) zur Öffnungsmitte hin, insbesondere unter Ausbildung einer Ringschneide (38), verjüngt.

15. Verschlusseinrichtung (1) nach einem oder mehreren der vorangehenden Ansprüche, **dadurch gekennzeichnet, dass** das Füllkammergehäuse (3) mehrere Gehäuseteile (6, 7, 8, 9) aufweist und dass die Verschlusseinrichtung (1) ein oder mehrere Gehäuseteile (6, 7, 8, 9) umfasst, deren Verbindungsflächen Vertiefungen zur Bildung von Reinigungskammern (24) bilden.

16. Verschlusseinrichtung (1) nach einem oder mehreren der vorangehenden Ansprüche, **dadurch gekennzeichnet, dass** die Füllkammer (5) zumindest einen, insbesondere im oberen Kammerbereich mündenden, Fluidanschluss (43) aufweist, der mit einer Zufuhreinrichtung für ein Reinigungsfluid, insbesondere für Druckluft, verbunden ist.

17. Verschlusseinrichtung (1) nach einem oder mehreren der vorangehenden Ansprüche, **dadurch gekennzeichnet, dass** die Füllkammer (5) zumindest einen, insbesondere im unteren Kammerbereich mündenden, Fluidanschluss aufweist, der mit einer Absaugeinrichtung verbunden ist.

18. Probendosiervorrichtung (2), ausweisend zumindest eine Verschlusseinrichtung (1) gemäß einem oder mehreren der vorangehenden Ansprüche.

19. Verfahren zum Betrieb einer Verschlusseinrichtung (1), insbesondere einer Probendosiervorrichtung, nach Anspruch 6 und insbesondere nach einem oder mehreren der weiteren vorangehenden Ansprüche, **dadurch gekennzeichnet, dass** die Reinigungskammer (24) zur Entfernung von Probenmaterial zumindest nach einer Anzahl, insbesondere automatisch nach einer bestimmten Mehrzahl, von Betätigungen des Trennschiebers (17) mit einem Reinigungsfluid, insbesondere mit Druckluft, durchströmt wird und / oder aus der Reinigungskammer (24) Fluid abgesaugt wird.

20. Verfahren nach Anspruch 19, **dadurch gekennzeichnet, dass** die Reinigungskammer (24) zur Entfernung von Probenmaterial laufend mit einem Reinigungsfluid, insbesondere mit Druckluft, durchströmt wird und / oder laufend aus der Reinigungskammer (24) Fluid abgesaugt wird.

21. Verfahren nach einem oder beiden der Ansprüche 19 und 20, **dadurch gekennzeichnet, dass** die Füllkammer (5) zur Entfernung von Probenmaterialresten nach der Entleerung des Probenmaterials mit einem Reinigungsfluid, insbesondere mit Druckluft, durchströmt wird und / oder aus der Füllkammer (5) Fluid abgesaugt wird.

22. Verfahren nach einem oder mehreren der Ansprüche 19 bis 21, **dadurch gekennzeichnet, dass** eine Verschlusseinrichtung verwendet wird, von deren mehreren miteinander verbundenen Reinigungskammern (24) eine oder mehrere Reinigungskammern (24) zumindest einen eigenen Fluidanschluss (35) zur Zufuhr von Reinigungsfluid aufweist, dass in die eine zumindest einen eigenen Fluidanschluss (35) zur Zufuhr von Reinigungsfluid aufweisende Reinigungskammer (24), insbesondere in die oberste der miteinander verbundenen Reinigungskammern (24), oder in die mehreren der zumindest einen eigenen Fluidanschluss (35) zur Zufuhr von Reinigungsfluid aufweisenden Reinigungskammern (24) Reinigungsfluid zugeführt wird, dass das zugeführte Reinigungsfluid in sämtlichen miteinander verbundenen Reinigungskammern (24) verteilt wird und dass das Reinigungsfluid mittels eines den miteinander verbundenen Reinigungskammern (24) gemeinsamen Fluidanschlusses (32) zu einer Absaugeinrichtung zentral aus allen miteinander verbundenen Reinigungskammern (24) abgesaugt wird,

## Claims

1. Closure device (1), in particular for a sample-metering apparatus (2) for metering sample material consisting of free-flowing bulk material, comprising a filling-chamber housing (3) or at least one housing part (6, 7, 8, 9) which delimits a hollow cross-section of a filling chamber (5), and comprising at least one shut-off valve (17) which has a through-opening (19) and can be displaced through a guidance gap (23), transverse to a longitudinal direction (L) of the filling chamber, between an open position and a closed position, the shut-off valve (17) in the open position forming a passage in a filling-chamber cross-section by means of its through-opening (19), and the shut-off valve (17) in the closed position closing the filling-chamber cross-section, a cleaning chamber (24) being formed, the height (K) of which is greater than the height (S) of the guidance gap (23) and which is associated in positional terms with the shut-off valve (17) such that in the closed position the edge of the through-opening (19) is located in the cleaning chamber (24), a plurality of shut-off valves (17) being arranged spaced apart along the filling chamber (5) and each cleaning chamber (24) being associated with a plurality of shut-off valves (17) **characterised in that** a plurality of cleaning chambers (24) are interconnected.

2. Closure device (1) according to claim 1, **characterised in that** three shut-off valves (17) are arranged spaced apart along the filling chamber (5).

3. Closure device (1) according to one or both of claims 1 and 2, **characterised in that** all the cleaning chambers (24) are interconnected.

4. Closure device (1) according to claim 1, **characterised in that** the chamber height (K) is several times, in particular in the range of three to twenty times, the height (S) of the guidance gap (23).

5. Closure device according to one or more of the preceding claims, **characterised in that** the cleaning chamber (24) which, according to the preamble of claim 1, is associated with at least one shut-off valve (17), extends under and/or above the shut-off valve (17).

6. Closure device (1) according to one or more of the preceding claims, **characterised in that** at least one cleaning chamber (24) is equipped with at least one fluid connection (32, 35).

7. Closure device (1) according to claim 6, **characterised in that** the cleaning chamber (24) has at least one fluid connection (32) which is connected to a suction device, and/or **in that** the cleaning chamber (24) has at least one fluid connection (35) which is connected to a feed device for a cleaning fluid, in particular for compressed air.

8. Closure device (1) according to one or more of the preceding claims, **characterised in that** two fluid outlet openings (36), connected to a feed device for a cleaning fluid, in particular for compressed air, are associated with the shut-off valve (17), each of the fluid outlet openings (36) being arranged in the displacement direction in front of and behind the hollow cross-section of the filling chamber (5).

9. Closure device (1) according to one or more of the preceding claims, **characterised in that** one or more of the plurality of interconnected cleaning chambers (24), in particular each cleaning chamber (24), has at least one dedicated fluid connection (35) for feeding cleaning fluid, and **in that** the interconnected cleaning chambers (24) have at least one common fluid connection (32) to a suction device, which connection is arranged in particular in the region of the lowermost cleaning chamber (24).

10. Closure device (1) according to one or more of the preceding claims, **characterised in that** the cleaning chambers (24) are surrounded by the filling-chamber housing (3) or by filling-chamber housing parts (6, 7, 8, 9).

11. Closure device (1) according to one or more of the preceding claims, **characterised in that** at least part of the cleaning chamber (24) is arranged outside the filling-chamber housing (3) or filling-chamber housing parts (6, 7, 8, 9).

12. Closure device (1) according to one or more of the preceding claims, **characterised in that** the at least one shut-off valve (17) according to the preamble of claim 1 is coated with a non-stick coating, in particular with a nano coating.

13. Closure device (1) according to one or more of the preceding claims, **characterised in that** the at least one shut-off valve (17) according to the preamble of claim 1 is coated with an antistatic coating which in particular has carbon particles.

14. Closure device (1) according to one or more of the preceding claims, **characterised in that** the edge profile of the through-opening (18) of the at least one shut-off valve (17) according to the preamble of claim 1 tapers towards the centre of the opening, in particular forming an annular cutting edge (38).

15. Closure device (1) according to one or more of the preceding claims, **characterised in that** the filling-chamber housing (3) has a plurality of housing parts (6, 7, 8, 9), and **in that** the closure device (1) comprises one or more housing parts (6, 7, 8, 9), the connecting surfaces of which form recesses for forming cleaning chambers (24).

16. Closure device (1) according to one or more of the preceding claims, **characterised in that** the filling chamber (5) has at least one fluid connection (43) which opens in particular in the upper chamber region and is connected to a feed device for a cleaning fluid, in particular for compressed air.

17. Closure device (1) according to one or more of the preceding claims, **characterised in that** the filling chamber (5) has at least one fluid connection which opens in particular in the lower chamber region and is connected to a suction device.

18. Sample-metering apparatus (2) comprising at least one closure device (1) according to one or more of the preceding claims.

19. Method for operating a closure device (1), in particular a sample-metering apparatus, according to claim 6 and in particular according to one or more of the other preceding claims, **characterised in that** a cleaning fluid, in particular compressed air, flows through the cleaning chamber (24) in order to remove sample material at least after the shut-off valve (17) has been actuated a number of times, in particular automatically after a certain plurality of times, and/or fluid is sucked away from the cleaning chamber (24).

20. Method according to claim 19, **characterised in that** a cleaning fluid, in particular compressed air, flows continuously through the cleaning chamber (24) in order to remove sample material, and/or fluid is continuously sucked away from the cleaning chamber (24).

21. Method according to one or both of claims 19 and 20, **characterised in that** a cleaning fluid, in particular compressed air, flows through the filling chamber (5) in order to remove sample-material residues following emptying of the sample material, and/or fluid is sucked away from the filling chamber (5).

22. Method according to one or more of claims 19 to 21, **characterised in that** a closure device is used, one or more cleaning chambers (24) of the plurality of interconnected cleaning chambers (24) of which has at least one dedicated fluid connection (35) for feeding cleaning fluid, **in that** cleaning fluid is fed into the cleaning chamber (24) having at least one dedicated fluid connection (35) for feeding cleaning fluid, in particular into the uppermost cleaning chamber of the interconnected cleaning chambers (24), or into the plurality of cleaning chambers (24) having at least one dedicated fluid connection (35) for feeding cleaning fluid, **in that** the cleaning fluid fed in is distributed in all the interconnected cleaning chambers (24), and **in that** the cleaning fluid is centrally sucked away from all the interconnected cleaning chambers (24) to a suction device by means of one of the fluid connections (32) common to the interconnected cleaning chambers (24).

## Revendications

1. Dispositif de fermeture (1) en particulier pour un dispositif de dosage d'échantillon (2) pour doser du matériau d'échantillon provenant de matière en vrac coulante, comprenant un logement (3) de chambre de remplissage ou au moins une partie (6, 7, 8, 9) de logement qui borde une section transversale creuse d'une chambre de remplissage (5), et comprenant au moins une vanne d'arrêt (17) qui présente une ouverture de transit (19) et peut être déplacée à travers une fente de guidage (23) transversalement à une direction longitudinale (L) de la chambre de remplissage entre une position ouverte et une position fermée, dans lequel la vanne d'arrêt (17) forme avec son ouverture de transit (19) un passage d'une section transversale de chambre de remplissage dans la position ouverte et la vanne d'arrêt (17) ferme la section transversale de chambre de remplissage dans la position fermée, dans lequel est formée une chambre de nettoyage (24) dont la hauteur (K) de chambre est plus grande que la hauteur (S) de la fente de guidage (23) et qui est associée à la vanne d'arrêt (17) de telle manière que le bord de l'ouverture de transit (19) se trouve dans la chambre de nettoyage (24) dans la position fermée, dans lequel une pluralité de vannes d'arrêt (17) sont disposées espacées le long de la chambre de remplissage (5) et une chambre de nettoyage (24) est associée à plusieurs vannes d'arrêt (17), **caractérisé en ce que** plusieurs chambres de nettoyage (24) sont reliées entre elles.

2. Dispositif de fermeture (1) selon la revendication 1, **caractérisé en ce que** trois vannes d'arrêt (17) sont disposées espacées le long de la chambre de remplissage (5).

3. Dispositif de fermeture (1) selon l'une ou les deux des revendications 1 et 2, **caractérisé en ce que** toutes les chambres de nettoyage (24) sont reliées entre elles.

4. Dispositif de fermeture (1) selon la revendication 1, **caractérisé en ce que** la hauteur (K) de chambre est un multiple, en particulier de l'ordre de trois à vingt fois, de la hauteur (S) de la fente de guidage (23).

5. Dispositif de fermeture selon une ou plusieurs des revendications précédentes, **caractérisé en ce que** la chambre de nettoyage (24) qui, selon le préambule de la revendication (1), est associée à ladite au moins une vanne d'arrêt (17) s'étend en dessous et/ou au-dessus de la vanne d'arrêt (17).

6. Dispositif de fermeture (1 ) selon une ou plusieurs des revendications précédentes, **caractérisé en ce qu'**au moins une chambre de nettoyage (24) est équipée d'au moins un raccordement fluidique (32, 35).

7. Dispositif de fermeture (1) selon la revendication 6, **caractérisé en ce que** la chambre de nettoyage (24) présente au moins un raccordement fluidique (32) qui est relié à un dispositif d'aspiration et/ou **en ce que** la chambre de nettoyage (24) présente au moins un raccordement fluidique (35) qui est relié à un dispositif d'alimentation pour un fluide de nettoyage, en particulier pour de l'air sous pression.

8. Dispositif de fermeture (1) selon une ou plusieurs des revendications précédentes, **caractérisé en ce que** deux ouvertures de sortie (36) de fluide reliées à un dispositif d'alimentation pour un fluide de nettoyage, en particulier pour de l'air sous pression, sont associées à la vanne d'arrêt (17), une de ces ouvertures de sortie (36) de fluide étant disposée avant et une après la section transversale creuse de la chambre de remplissage (5) dans la direction de déplacement.

9. Dispositif de fermeture (1) selon une ou plusieurs des revendications précédentes, **caractérisé en ce qu'**un ou plusieurs des multiples chambres de nettoyage (24) reliées entre elles, en particulier chaque chambre de nettoyage (24) présente au moins son propre raccordement fluidique (35) pour l'alimentation en fluide de nettoyage et **en ce que** les chambres de nettoyage (24) reliées entre elles présentent au moins un raccordement fluidique (32) commun, disposé en particulier dans la région de la chambre de nettoyage (24) située le plus bas, à un dispositif d'aspiration.

10. Dispositif de fermeture (1) selon une ou plusieurs des revendications précédentes, **caractérisé en ce que** les chambres de nettoyage (24) sont entourées par le logement (3) de chambre de remplissage ou par des parties (6, 7, 8, 9) de logement de chambre de remplissage.

11. Dispositif de fermeture (1) selon une ou plusieurs des revendications précédentes, **caractérisé en ce que** la chambre de nettoyage (24) est disposée au moins en partie en dehors du logement (3) de chambre de remplissage ou des parties (6, 7, 8, 9) de logement de chambre de remplissage.

12. Dispositif de fermeture (1) selon une ou plusieurs des revendications précédentes, **caractérisé en ce que** ladite au moins une vanne d'arrêt (17) selon le préambule de la revendication 1 est revêtue d'un revêtement anti-adhérent, en particulier d'une nano-peinture.

13. Dispositif de fermeture (1) selon une ou plusieurs des revendications précédentes, **caractérisé en ce que** ladite au moins une vanne d'arrêt (17) selon le préambule de la revendication 1 est revêtue d'un revêtement antistatique qui présente en particulier des particules de carbone.

14. Dispositif de fermeture (1) selon une ou plusieurs des revendications précédentes, **caractérisé en ce que** le profil de bord de l'ouverture de transit (18) de ladite au moins une vanne d'arrêt (17) selon le préambule de la revendication 1 se rétrécit en direction du milieu de l'ouverture, en particulier en formant une arête vive annulaire (38).

15. Dispositif de fermeture (1) selon une ou plusieurs des revendications précédentes, **caractérisé en ce que** le logement (3) de chambre de remplissage présente plusieurs parties (6, 7, 8, 9) de logement et **en ce que** le dispositif de fermeture (1) comporte une ou plusieurs parties (6, 7, 8, 9) de logement dont les surfaces de liaison forment des dépressions pour former les chambres de nettoyage (24).

16. Dispositif de fermeture (1) selon une ou plusieurs des revendications précédentes, **caractérisé en ce que** la chambre de remplissage (5) présente au moins un raccordement fluidique (43), débouchant en particulier dans la région supérieure de la chambre, lequel est relié à un dispositif d'alimentation pour un fluide de nettoyage, en particulier pour de l'air sous pression.

17. Dispositif de fermeture (1) selon une ou plusieurs des revendications précédentes, **caractérisé en ce que** la chambre de remplissage (5) présente au moins un raccordement fluidique, débouchant en particulier dans la région inférieure de la chambre, lequel est relié à un dispositif d'aspiration.

18. Dispositif de dosage d'échantillon (2) présentant au moins un dispositif de fermeture (1) selon une ou plusieurs des revendications précédentes.

19. Procédé pour faire fonctionner un dispositif de fermeture (1), en particulier d'un dispositif de dosage d'échantillon, selon la revendication 6 et en particulier selon une ou plusieurs des revendications précédentes, **caractérisé en ce que** pour éliminer du matériau d'échantillon au moins après un nombre, en particulier automatiquement après un nombre déterminé, d'actionnements de la vanne d'arrêt (17), la chambre de nettoyage (24) est parcourue par un fluide de nettoyage, en particulier par de l'air sous pression, et/ou du fluide est aspiré de la chambre de nettoyage (24).

20. Procédé selon la revendication 19, **caractérisé en ce que** pour éliminer du matériau d'échantillon, la chambre de nettoyage (24) est parcourue en continu par un fluide de nettoyage, en particulier par de l'air sous pression, et/ou du fluide est aspiré en continu de la chambre de nettoyage (24).

21. Procédé selon l'une ou les deux des revendications 19 et 20, **caractérisé en ce que** pour éliminer des restes de matériau d'échantillon après évacuation du matériau d'échantillon, la chambre de remplissage (5) est parcourue par un fluide de nettoyage, en particulier par de l'air sous pression, et/ou du fluide est aspiré de la chambre de remplissage (5).

22. Procédé selon une ou plusieurs des revendications 19 à 21, **caractérisé en ce qu'**il est fait usage d'un dispositif de fermeture dont une ou plusieurs chambres de nettoyage (24) des plusieurs chambres de nettoyage (24) reliées entre elles présente/nt au moins un raccordement fluidique (35) propre pour amener du fluide de nettoyage, **en ce que** du fluide de nettoyage est amené dans la chambre de nettoyage (24) présentant ledit au moins un raccordement fluidique (35) propre pour amener du fluide de nettoyage, en particulier dans celle des chambres de nettoyage (24) reliées entre elles située le plus haut, ou dans les plusieurs chambres de nettoyage (24) présentant ledit au moins un raccordement fluidique (35) propre pour amener du fluide de nettoyage, **en ce que** le fluide de nettoyage amené est distribué dans toutes les chambres de nettoyage (24) reliées entre elles et **en ce que** le fluide de nettoyage est aspiré centralement de toutes les chambres de nettoyage (24) reliées entre elles au moyen d'un raccordement fluidique (32) à un dispositif d'aspiration, lequel raccordement est commun aux chambres de nettoyage (24) reliées entre elles.
